# EUROPEAN PATENT SPECIFICATION

(11) **EP 2 369 197 B1**
(45) Date of publication and mention of the grant of the patent: **19.09.2012**
(21) Application number: 10425068.3
(22) Date of filing: 12.03.2010
(51) Int. Cl.: F16D 48/04

(54) **Double actuation system for truck clutch**
Doppelbetätigtes System für LKW-Kupplung
Double système d'activation pour embrayage de camion

(43) Date of publication of application: 28.09.2011
(73) Proprietor: Iveco S.p.A., 10156 Torino (IT)
(72) Inventor: Coelho, Ricardo Victorino, Sete Lagoas Minas Gerais 35.700-000 (BR)
(74) Representative: Borsano, Corrado

(56) References cited:
- EP-A1- 0 324 553
- DE-A1-102009 004 706
- GB-A- 2 052 002

## Description

### Field of the Invention

This invention relates to a clutch actuation system, in particular a clutch actuation system having a double pneumatic component assistance, which confers low clutch pedal effort for use in trucks, mainly median/heavy trucks.

### Description of the Prior Art

In the past, pneumatic devices were employed to facilitate the actuation in automotive vehicles. These devices provided different ways to aid the user's effort with a servo-assisted system.

A prior art clutch actuation system is known from GB-A-2052002.

The standard actuation system for median/heavy truck, used in the prior art systems comprises a master cylinder, including a single hydraulic system, and a servo-assisted system, having a hydraulic system and pneumatic component assistance.

It is currently available in the market several models of heavy truck that uses clutch actuation system, such as SCANIA^{®} R420 or VOLVO^{®} FH 440. These systems provide a clutch actuation system with a pedal effort of at least 9.0 kg and 10.7 Kg, respectively, but to achieve said effort it is necessary to substantially increase the size and the travel of the pedal, which leads to cost increase and ergonomic problems causing discomfort to the driver. Besides, this configuration employed by Scania and Volvo causes wear of the plate and the clutch facing due to extended pedal travel.

The model STRALIS currently available by IVECO uses a clutch actuation system with a master cylinder and a servo assistance. With this configuration, the pedal effort is around 16 kg causing high clutch pedal effort.

Therefore, it does not exist in the prior art a clutch actuation system which provides at the same time low clutch pedal effort and low pedal trepidation.

Against this background, the purpose of the present invention is to provide a comparatively simple and inexpensive double actuation system comprising:
- a "master assistance" that comprises a hydraulic system and pneumatic component assistance;
- a "servo assistance" that comprises a hydraulic system and pneumatic component assistance; and
- a pressure regulator valve included in the pneumatic component assistance, which feeds the "master assistance" and the "servo assistance" in combination with a muffler specially adapted to prevent clutch pedal trepidation.

### Summary of the Invention

The above-mentioned drawbacks have been successfully solved by the present invention by means of a double actuation system as defined in claim 1. The system is provided with double pneumatic component assistance, which provides low clutch pedal effort and low pedal trepidation for use in median/heavy truck vehicles.

According to the invention, it is provided a double actuation system comprising a master assistance (hydraulic system + pneumatic component assistance) and servo-assistance (hydraulic system + pneumatic component assistance). With the configuration of the present invention, the pedal effort is reduced to approximately 8.5 Kg (having a pedal travel of 140 mm). A important feature of this arrangement is that this reduced clutch pedal effort is obtained without increasing the dimensions of pedal. By using the present configuration, the driver's comfort is enhanced. Also, if one of pneumatic component assistance fails, the system will not stop working due to the existence of another component pneumatic. Finally, said system will provide more durability to disc clutch and plate.

The present invention also relates to a new hydraulic pipe with a pressure regulator valve and a muffler, which are specially adapted to prevent clutch pedal trepidation.

Further areas of applicability will become apparent from the description provided herein. It should be understood that the description and specific examples are intended for purposes of illustration only and are not intended to limit the scope of the present disclosure.

### Brief Description of the Drawings

The present invention will be explained by means of a detailed description of a preferred, but non-exclusive, embodiment shown with the aid of the drawings that are attached hereto, which are merely illustrative and not-limitative, in which:
Figure 1 depicts a graphical representation of the load to which the driver is subject upon actuating the clutch pedal of a standard actuation system used in the prior art.
Figure 2 shows a graphical representation of the load to which the driver is subject upon actuating the clutch pedal in accordance with the present invention.
Figures 3A and 3B show the operation of clutch double actuation system according to the present invention.
Figure 4 shows a graph indicating the measurement results of hydraulic pressure x pedal travel of the clutch actuation system according to the present invention.
Figure 5 shows a graph of clutch pedal comparison between the present invention and commercial available of actuation system the prior of art.

### Detailed Description of an Embodiment of the Invention

The following description is merely exemplary in nature and is in no way intended to limit the invention, its application, or uses.

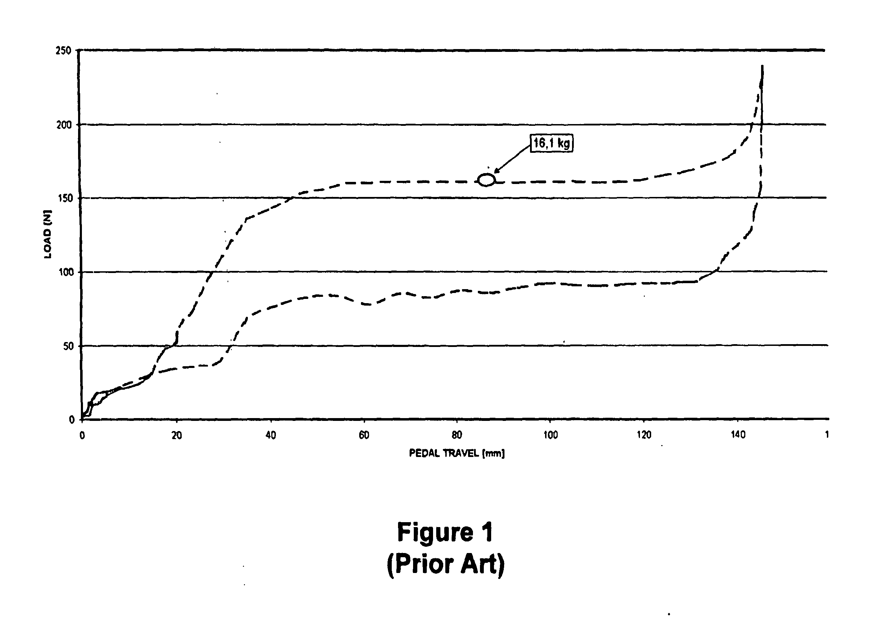

With reference to Figure 1, a graph depicting the load versus pedal travel is presented. The load to which the driver is subject upon actuating the clutch pedal of a prior art actuation system is about 16 Kg. This high load imposes an uncomfortable environment to the driver due to an excessive effort to actuate the clutch pedal, in particular for those working many hours a day.

As previously discussed, this prior art system uses a standard actuation system comprising a master cylinder (hydraulic system) and a servo assistance (hydraulic system + pneumatic component assistance), which provides a high pedal effort.

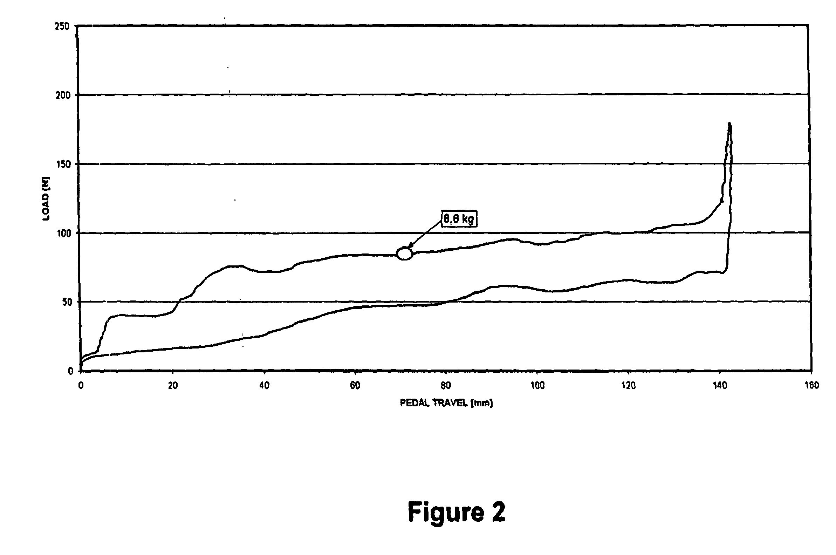

Referring now to Figure 2, which represents a graph of clutch pedal effort according to present invention, using a double actuation system comprising:
- a "master assistance" (M) that comprises a hydraulic system (H) and pneumatic component assistance (P);
- a "servo assistance" (S) that comprises a hydraulic system (H) and pneumatic component assistance (P); and
- a pneumatic pressure regulator valve (12) to be included in the pneumatic component assistance (P) which feeds the "master assistance" (M) and the "servo assistance" (S) in combination with a muffler (13) included in the hydraulic pipe (3), between said "master assistance" (M) and the "servo assistance" (S), which is particularly adapted to prevent clutch pedal trepidation.

This new configuration provides a reduced pedal effort to approximately 8.5 Kg (having a pedal travel of 140 mm). An important feature provided by the configuration of the present invention is that this reduced clutch pedal effort is obtained without increasing the size of pedal.

### Operation of Hydraulic system (H)

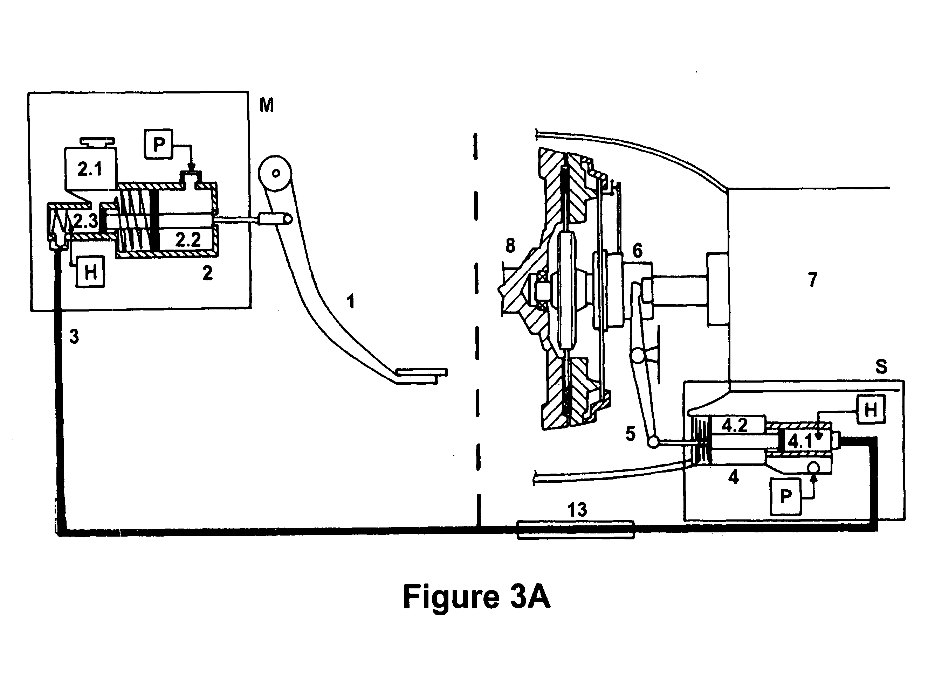

According to a preferred embodiment of the invention, the operation of the hydraulic system (H) of the clutch double actuation system occurs as follow: the clutch pedal (1) triggers the master cylinder (2.3), generating the shift of the oil supplied by reservoir (2.1) moving the piston of the servo cylinder (4.1). The rod of the servo cylinder moves the clutch fork (5). Then, the displacement of the bearing (6) occurs and disengages the clutch disc, causing the disconnection of the engine flywheel (8) of transmission (7), allowing smooth engagement of the gear, as shown in Figure 3A. The hydraulic pressure is around of 6, 5 bar.

### Operation of Pneumatic Component Assistance (P)

According to a preferred embodiment of the invention shown in Figure 3A, the operation of the pneumatic component assistance (P) occurs as follows: the beginning of the actuation of pedal opens the feeding to the pneumatic cylinder (2.2) of the master valve (2), reducing the effort to move the hydraulic fluid that also is made by the pneumatic component assistance. A similar process occurs in the servo valve (4), the beginning of the actuation generates an increase in hydraulic pressure due to the resistance to uncoupling of the clutch disc, which releases the feeding to the cylinder (4.2). With the configuration of the present invention, the pressure pneumatic system reaches each pneumatic cylinder in a range between 7.0 Bar and 11.0 Bar. In a preferred embodiment, said range is between 8.0 Bar and 9.0 Bar. More preferably, said pressure is reduced to around 8.5 Bar.

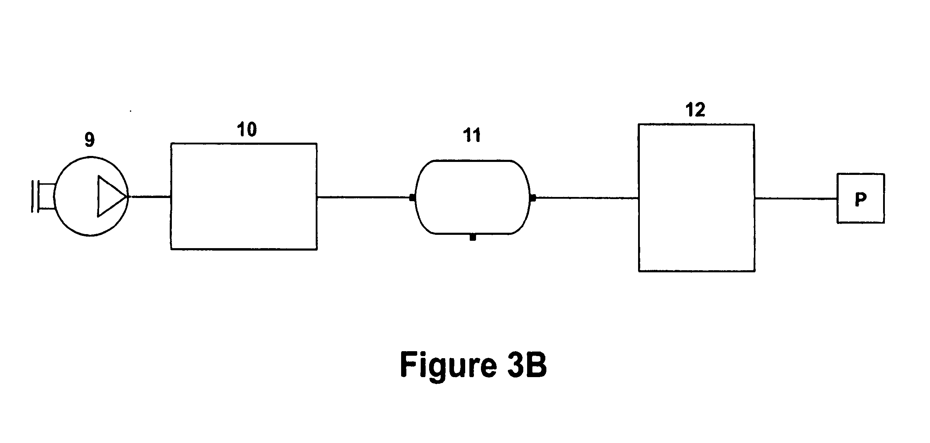

As shown in Figure 3B, the pneumatic component assistance (P) is disposed according to the following arrangement: atmospheric air enters into the compressor (9), which pressurizes the same. The air passes through a pneumatic manager element (10) and is stored in the reservoir (11).

The actuation system of the present invention counts on a pneumatic pressure regulator valve (12) and a muffler (13) to equalize the effort and the sensibility in the clutch pedal.

In order to reduce the pedal trepidation, as well as obtaining a low pedal effort, the present invention includes a muffler (13), which is a component that reduces backpressure by means of a resonating chamber, which is specifically tuned to cause destructive interference in the fluid, where opposite waves cancel each other out for reducing the speed of the fluid.

In other words, the pneumatic feeding in the valve (4) reduces the hydraulic pressure by indirect reduction of the effort and the valve (2) reduces directly the drive's effort.

In summing up, the pneumatic feeding at valve (4) reduces the hydraulic pressure by indirect reduction of the effort, and the valve (2) directly reduces the effort. Therefore, the present invention provides a pneumatic pressure of approximately 8,5 bar and a hydraulic pressure of approximately 6,5 bar.

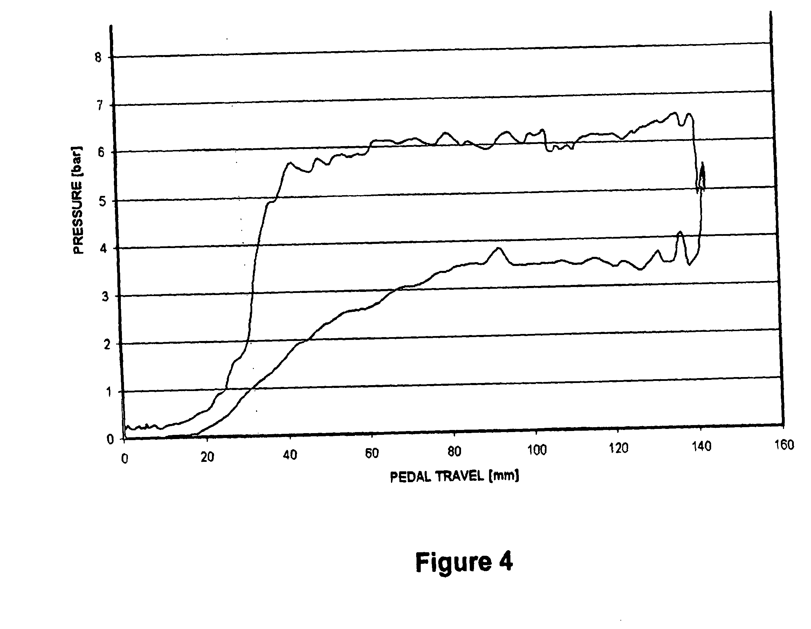

Referring now to Figure 4, which shows a graph indicating the measurement results of hydraulic pressure vs. pedal travel of the clutch actuation system according to the present invention. The low hydraulic pressure, around 6 bar is an evidence that de servo assistance is working.

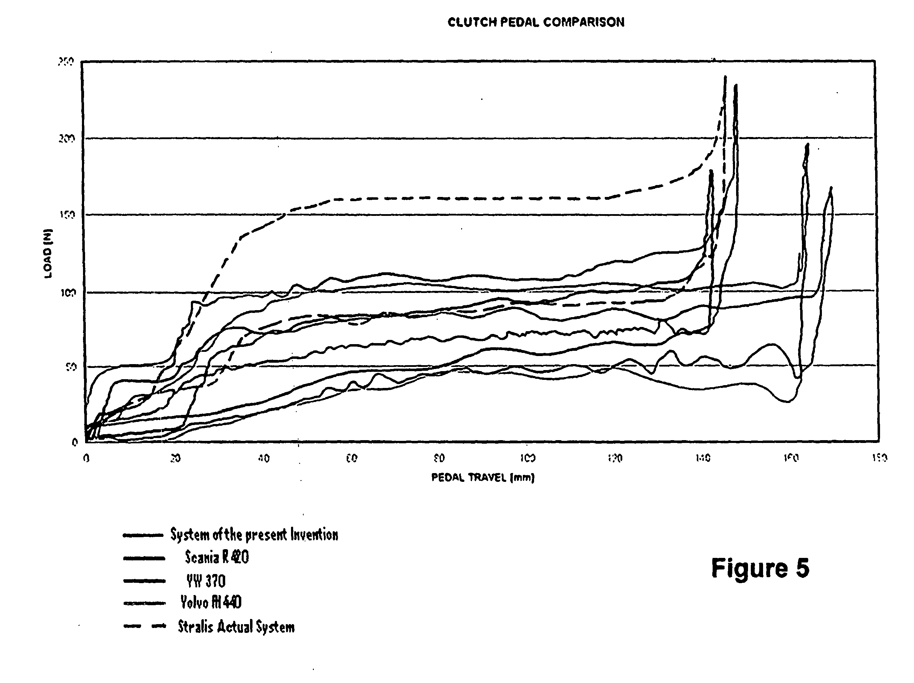

Making reference now to Figure 5, which shows a graph of clutch pedal comparison between the present invention and several models of prior of art. VOLVO and SCANIA have a low pedal load, but thanks to a high pedal travel. VW offers a very good performance, but with a low plate bearing load.

Table 1 is a comparative table between the prior art system and the double actuation system regarding air consumption.

**TABLE 1**

| | Prior art system | Double actuation system |
|---|---|---|
| Compressor air mass supplied | 9,91 g/s | 9,91 g/s |
| Total mass that clutch actuation system demands | 2,71 g/action | 3,01 g/action |
| Total air mass consumption | 2,71 g/s | 3,01 g/s |
| Air consumption/air supply | 27,4% | 30,4% |

According to table 1, a difference of 3% occurs for air consumption for the double actuation system of the present invention.

An additional advantage of the present invention is that the master assistance and the servo assistance of this double actuation system can operate independently. This means that if one of the assistances of the master assistance or of the servo assistance fails, the actuation system can still work, as the load for actuating the clutch pedal will be about 16 Kg, according to the preferred embodiment. This load of 16 Kg is still acceptable for a safe driving.

In conclusion, the present invention offers a double actuation system for a median/heavy truck, said double actuation system having master assistance (hydraulic system + pneumatic component assistance) and a servo assistance (hydraulic system + pneumatic component assistance), which provides enhanced durability to the disc clutch and plate. According to the invention, there is a provision for a pneumatic pressure regulator valve to be included in the pneumatic component assistance, which feeds the "master assistance" and the "servo assistance" in combination with a muffler (13) specially adapted to prevent clutch pedal (1) trepidation.

Thus, while there have been shown and described and pointed out fundamental novel features of the present invention as applied to a preferred embodiment thereof, it will be understood that various omissions and substitutions and changes in the form and details of the system illustrated, and in its operation, may be made by those skilled in the art without departing from the scope of the present invention. It is also to be understood that the drawings are not necessarily drawn to scale but that they are merely conceptual in nature. It is the intention, therefore, to be limited only as indicated by the scope of the claims appended hereto.

## Claims

1. Double actuation system for truck clutches **characterized in that** it comprises:
- a "master assistance" (M) that comprises a hydraulic system and pneumatic component assistance;
- a "servo assistance" (S) that comprises a hydraulic system and pneumatic component assistance; and
- a pneumatic pressure regulator valve (12) included in the pneumatic component assistance which feeds the "master assistance" (M) and the "servo assistance" (S) in combination with a muffler (13) included in the hydraulic pipe (3), between said "master assistance" (M) and the "servo assistance" (S).

2. Double actuation system as in claim 1, wherein said pressure pneumatic assistance reaches each pneumatic cylinder in a range between 7.0 Bar and 11.0 Bar, preferably, in a range between 8.0 Bar and 9.0 Bar, more preferably, said pressure is reduced to around 8.5 Bar.

3. Double actuation system as in claim 1, wherein the hydraulic system (H) of the double actuation system works as follows: a clutch pedal (1) triggers a master cylinder (2.3), generating the shift of the oil supplied by a reservoir (2.1) moving the piston of the servo cylinder (4.1); the rod of the servo cylinder moving the clutch fork (5); then, the displacement of the bearing (6) occurs and disengages the clutch disc, causing the disconnection of an engine flywheel (8) from the transmission (7), allowing smooth engagement of the gear.

4. Double actuation system as in claim 1, wherein the pneumatic component assistance (P) works as follows: the beginning of the actuation of pedal opens the feeding to a pneumatic cylinder (2.2) of a master valve (2), reducing the effort to move the hydraulic fluid; a similar process occurring in the servo valve (4), the beginning of the actuation generates an increase in hydraulic pressure due to the resistance to uncoupling of the clutch disc, which releases the feeding to the cylinder (4.2).

5. Double actuation system as in claim 4, wherein the pneumatic component assistance is disposed according to the following arrangement: atmospheric air enters into the compressor (9), which pressurizes the same; the air passes through a pneumatic manager element (10) and is stored in the reservoir (11); said pressure regulator valve (12) and said muffler (13) being combined to equalize the effort and the sensibility in the clutch pedal.

6. Double actuation system as in claim 1, wherein the master assistance and the servo assistance can operate independently.

## Patentansprüche

1. Zweifach-Betätigungssystem für Lkw-Kupplungen,
**dadurch gekennzeichnet, dass** es umfasst:
- eine "Hauptunterstützung" (M), die ein Hydrauliksystem und eine Pneumatikkomponentenunterstützung umfasst;
- eine "Servounterstützung" (S), die ein Hydrauliksystem und eine Pneumatikkomponentenunterstützung umfasst; und
- ein Pneumatikdruckregelventil (12), das in der Pneumatikkomponentenunterstützung enthalten ist, welches die "Hauptunterstützung" (M) und die "Servounterstützung" (S) speist, in Kombination mit einem Dämpfer (13), der in dem Hydraulikrohr (3) zwischen der "Hauptunterstützung" (M) und der " Servounterstützung" (S) enthalten ist.

2. Zweifach-Betätigungssystem nach Anspruch 1,
wobei die Pneumatikdruckunterstützung jeden Pneumatikzylinder in einem Bereich zwischen 7,0 bar und 11,0 bar, bevorzugt in einem Bereich zwischen 8,0 bar und 9,0 bar erreicht, wobei der Druck stärker bevorzugt auf etwa 8,5 bar reduziert ist.

3. Zweifach-Betätigungssystem nach Anspruch 1,
wobei das Hydrauliksystem (H) des Doppelbetätigungssystems wie folgt arbeitet: ein Kupplungspedal (1) löst einen Hauptzylinder (2.3) aus, wobei das Verschieben des von einem Reservoir (2.1) zugeführten Öls erzeugt und der Kolben des Servozylinders (4.1) bewegt wird; wobei die Stange des Servozylinders die Kupplungsgabel (5) bewegt; anschließend tritt die Verschiebung des Lagers (6) auf und rückt die Kupplungsscheibe aus, wobei die Trennung eines Maschinenschwungrades (8) von dem Getriebe (7) bewirkt wird, wodurch ein sanfter Eingriff des Zahnrads zugelassen wird.

4. Zweifach-Betätigungssystem nach Anspruch 1,
wobei die Pneumatikkomponentenunterstützung (P) wie folgt arbeitet: der Beginn der Betätigung eines Pedals öffnet die Zufuhr zu einem Pneumatikzylinder (2.2) eines Hauptventils (2), wobei der Kraftaufwand, für das Bewegen des Hydraulikfluids vermindert wird; wobei ein ähnlicher Prozess in dem Servoventil (4) auftritt, wobei der Beginn der Betätigung eine Zunahme des Hydraulikdrucks aufgrund des Widerstandes gegenüber einem Entkoppeln der Kupplungsscheibe erzeugt, was die Zufuhr zu dem Zylinder (4.2) freigibt.

5. Zweifach-Betätigungssystem nach Anspruch 4,
wobei die Pneumatikkomponentenunterstützung gemäß der folgenden Anordnung angeordnet ist: atmosphärische Luft tritt in den Kompressor (9) ein, der selbige unter Druck setzt; die Luft gelangt durch ein Pneumatikmanagementelement (10) und wird in dem Reservoir (11) gespeichert; wobei das Druckregelventil (12) und der Dämpfer (13) kombiniert sind, um den Kraftaufwand und die Empfindlichkeit in dem Kupplungspedal auszugleichen.

6. Zweifach-Betätigungssystem nach Anspruch 1,
wobei die Hauptunterstützung und die Servounterstützung unabhängig arbeiten können.

## Revendications

1. Système de double actionnement pour des embrayages de camion, **caractérisé en ce qu'**il comprend en outre :
- une « assistance maîtresse » (M) qui comprend un système hydraulique et une assistance de composant pneumatique ;
- une « servoassistance » (S) qui comprend un système hydraulique et une assistance de composant pneumatique ; et
- une vanne de régulation de pression pneumatique (12) incluse dans l'assistance de composant pneumatique qui alimente l'« assistance maîtresse » (M) et la « servoassistance » (S) en combinaison avec un silencieux (13) inclus dans le tuyau hydraulique (3), entre ladite « assistance maîtresse » (M) et la « servoassistance » (S).

2. Système de double actionnement selon la revendication 1, dans lequel ladite assistance pneumatique de pression atteint chaque cylindre pneumatique dans une plage entre 7,0 bar et 11,0 bar, de préférence, dans une plage entre 8,0 bar et 9,0 bar, de manière davantage préférée ladite pression est réduite à environ 8,5 bar.

3. Système de double actionnement selon la revendication 1, dans lequel le système hydraulique (H) du système de double actionnement fonctionne comme suit : une pédale d'embrayage (1) déclenche un maître-cylindre (2.3), générant le transfert de l'huile alimentée par un réservoir (2.1) déplaçant le piston du servocylindre (4.1) ; la tige du servocylindre déplaçant la fourchette d'embrayage (5) ; ensuite le déplacement du palier (6) a lieu et désengage le disque d'embrayage, provoquant la déconnexion d'un volant moteur (8), de la transmission (7), permettant un engagement souple de la vitesse.

4. Système de double actionnement selon la revendication 1, dans lequel l'assistance de composant pneumatique (P) fonctionne comme suit : le début de l'actionnement de la pédale ouvre l'alimentation vers un cylindre pneumatique (2.2) d'une vanne maîtresse (2), réduisant l'effort pour déplacer le fluide hydraulique ; un procédé similaire ayant lieu dans la servovanne (4), le début de l'actionnement génère une augmentation de la pression hydraulique due à la résistance au découplage du disque d'embrayage, ce qui libère l'alimentation vers le cylindre (4.2).

5. Système de double actionnement selon la revendication 4, dans lequel l'assistance de composant pneumatique est disposée selon l'agencement suivait : de l'air atmosphérique entre dans le compresseur (19), ce qui met sous pression ce dernier ; l'air passe à travers un élément de gestionnaire pneumatique (10) et est stocké dans le réservoir (11) ; ladite vanne de régulation de pression (12) et ledit silencieux (13) étant combinés pour égaliser l'effort et la sensibilité dans la pédale d'embrayage.

6. Système de double actionnement selon la revendication 1, dans lequel l'assistance maîtresse et la servoassistance peuvent fonctionner indépendamment.
